# EUROPEAN PATENT APPLICATION

(11) **EP 3 609 200 A1**
(43) Date of publication of application: **12.02.2020**
(21) Application number: 17908168.2
(22) Date of filing: 04.05.2017
(51) Int. Cl.: H04W 4/02

(54) **PAGING METHOD AND APPARATUS**

(71) Applicant: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan Guangdong 523860 (CN)
(74) Representative: Manitz Finsterwald Patent- und Rechtsanwaltspartnerschaft mbB
(86) International application number: PCT/CN2017/082974
(87) International publication number: WO 2018/201366

(57) **Abstract**

Provided in embodiments of the present application are a paging method and apparatus, enabling effective paging of a terminal. The method comprises: a network apparatus determining, according to information of a first terminal to be paged, a target region to send paging information, the paging information being configured to page the first terminal; and sending, in the target region, the paging information.

## Description

### TECHNICAL FIELD

The invention relates to the field of communications, and in particular, to a paging method and device.

### BACKGROUND

Device-to-Device (D2D) communication refers to a communication mode in which data may be transported between adjacent terminals through a direct link within a short range without being forwarded through a central node (for example, a base station). The D2D communication shares licensed frequency band resources with a cellular system, and a unified cellular and D2D hybrid network is formed.

In the cellular and D2D hybrid network, there are two communication modes in a terminal. One communication mode is a cellular communication mode, in which the terminal communicates with a network device through a cellular network. The other communication mode is a D2D communication mode, in which terminals communicate directly with each other via a D2D link. When a terminal is located remotely from a network device, a D2D relay is needed to assist in the communication between the network device and the terminal. In this case, the cellular communication mode is used between the D2D relay and the network device, and the D2D communication mode is used between the terminal and the D2D relay.

Therefore, how to effectively page a terminal device by a network device is a problem worth studying.

### SUMMARY

Embodiments of the invention provide a paging method and device capable of effectively paging a terminal device.

According to a first aspect, a paging method is provided. The method includes that: a network device determines, according to information of a first terminal to be paged, a target area for sending a paging message, the paging message being used for paging the first terminal; and the network device sends the paging message in the target area.

Optionally, the first terminal may be a remote terminal or a relay terminal, and there may exist a coverage of a cellular network between the first terminal and the network device, or there is no coverage of a cellular network between the first terminal and the network device. If there is a coverage of a cellular network between the first terminal and the network device, the network device may page the first terminal through the cellular network. For example, the network device may page the first terminal in a coverage area of the cellular network, that is, if there is a cellular network between the network device and the first terminal, the target area for sending the paging message may be part or all of the coverage area of the cellular network, and the network device may send the paging message in the coverage area of the cellular network to page the first terminal.

Optionally, if there is no coverage of a cellular network between the first terminal and the network device, a relay terminal is required to relay communication between the first terminal and the network device. The network device may page the first terminal by using the relay terminal, and the paging message sent by the network device needs to be received by the relay terminal. Thus, the network device may send the paging message in a paging area for the relay terminal, in order that the relay terminal receives the paging message, and forwards the paging message to the first terminal to perform subsequent data transmission.

The paging area for the relay terminal may be considered as an area in which the paging message can be received by the relay terminal, for example, a cell in which the relay terminal currently resides, or a Tracking Area (TA) of the relay terminal in a TA LIST of a core network.

In conjunction with the first aspect, in some implementations of the first aspect, the information of the first terminal may include connection-state information between the first terminal and a second terminal.

Optionally, the information of the first terminal may include information of a relay terminal that has established a connection with the first terminal. The network device selects a target relay terminal between the first terminal and the network device according to the information of the relay terminal, sends the paging message for the first terminal to the target relay terminal, such that the paging message is forwarded to the first terminal by the target relay terminal.

Optionally, the information of the first terminal may specifically include quality information of a link between the first terminal and a relay terminal that has established a connection with the first terminal. The network device selects at least one relay terminal as a target relay terminal between the first terminal and the network device according to the quality information of the link between the first terminal and the relay terminal, sends the paging message for the first terminal to the at least one target terminal, such that the paging message is forwarded to the first terminal by the at least one target terminal.

In conjunction with the first aspect, in some implementations of the first aspect, the first terminal may be a remote terminal, and the second terminal may be a relay terminal between the first terminal and the network device.

In conjunction with the first aspect, in some implementations of the first aspect, the operation that the network device determines the target area for sending the paging message according to the information of the first terminal to be paged may include that:
in response to the connection-state information indicating that a connection has been established between the first terminal and the second terminal, the network device determines a specific area associated with the second terminal as the target area.

The operation that the network device sends the paging message in the target area may include that:
the paging message is sent in the specific area associated with the second terminal.

Therefore, according to the paging method in the embodiment of the invention, in a case where the first terminal is a remote terminal and the second terminal is a relay terminal, the network device may send the paging message in a specific area associated with the second terminal that has established a connection with the first terminal to be paged, in order that the second terminal receives the paging message. Since a connection has been established between the second terminal and the first terminal, the second terminal may forward the paging message to the first terminal by using an established link, thereby effectively paging the first terminal.

In conjunction with the first aspect, in some implementations of the first aspect, the information of the first terminal may include at least one of:
quality information of a link between the first terminal and a cellular network, or quality information of a link between the first terminal and a second terminal.

In conjunction with the first aspect, in some implementations of the first aspect, the operation that the network device determines the target area for sending the paging message according to the information of the first terminal to be paged may include that:
the network device determines a specific area associated with the second terminal as the target area when at least one of the following situations occurs: the quality information of the link between the first terminal and the cellular network satisfies a first preset condition, or the quality information of the link between the first terminal and the second terminal satisfies a second preset condition.

The operation that the network device sends the paging message in the target area may include that:
the paging message is sent in the specific area associated with the second terminal.

In conjunction with the first aspect, in some implementations of the first aspect, the situation that the quality information of the link between the first terminal and the cellular network satisfies the first preset condition may include that quality of the link between the first terminal and the cellular network is lower than a pre-configured first link quality threshold.

The situation that the quality information of the link between the first terminal and the second terminal satisfies the second preset condition may include that quality of the link between the first terminal and the second terminal is higher than a pre-configured second link quality threshold.

In conjunction with the first aspect, in some implementations of the first aspect, the specific area associated with the second terminal may include at least one of:
a registration area of the second terminal in a core network, a registration area of the second terminal in an access network, or a paging area of the access network.

The specific area associated with the second terminal may be understood as an area in which the second terminal may be paged. In other words, the paging message is sent in the specific area associated with the second terminal, which is beneficial for the second terminal to receive the paging message, and to forward the paging message to the first terminal.

Optionally, the specific area associated with the second terminal may include a registration area of the second terminal in a core network, that is, the paging message is sent in the registration area of the second terminal in the core network, which is beneficial for the second terminal to receive the paging message. For example, the registration area of the second terminal in the core network may include a TA LIST where the second terminal is located, where the TA LIST is stored in the core network. The network device may send the paging message in a TA in the TA LIST where the second terminal is located. The TA LIST where the second terminal is located may include TA LIST information of the second terminal, which is stored in the core network when the second terminal successfully registers in the core network. The TA LIST where the second terminal is located may also include a TA LIST where the second terminal is located after the second terminal performs Tracking Area Update (TAU). The registration area of the second terminal in the core network may also be a core network area determined or pre-configured by the network device for paging the second terminal, which is not limited in the embodiments of the invention.

Optionally, the specific area associated with the second terminal may include a registration area of the second terminal in an access network, that is, the paging message is sent in the registration area of the second terminal in the access network, which is beneficial for the second terminal to receive the paging message. The registration area of the second terminal in the access network may be understood as an access network area that is beneficial for the second terminal to receive the paging message. For example, the registration area of the second terminal in the access network may include a cell where the second terminal selects to reside after being powered on, or a cell where the second terminal resides after cell reselection, or a cell where the second terminal resides after location update, or the registration area of the second terminal in the access network may be an access network area determined or pre-configured by the network device for paging the second terminal.

Optionally, the paging area of the access network may include part or all of one or more cells covered by the network device, that is, part or all of the area covered by the cellular network of the network device.

In conjunction with the first aspect, in some implementations of the first aspect, the network device may be a core network device or an access network device.

In conjunction with the first aspect, in some implementations of the first aspect, the method may further include that:
the network device determines that the first terminal is to be paged.

In conjunction with the first aspect, in some implementations of the first aspect, the operation that the network device determines that the first terminal is to be paged may include that:
the network device determines that the first terminal is to be paged when downlink data for the first terminal arrives at the network device.

According to a second aspect, a paging device is provided, which includes units for performing the method in the first aspect or various implementations thereof.

According to a third aspect, a paging device is provided, which include a memory, a processor and a transceiver. The memory is configured to store a program. The processor is configured to execute the program. When the program is executed, the processor performs the method in the first aspect or various implementations thereof based on the transceiver.

According to a fourth aspect, a computer-readable storage medium is provided. The computer-readable storage medium has storing therein a program code for execution by a network device, and the program code includes instructions for performing the method in the first aspect or various implementations thereof.

### BRIEF DESCRIPTION OF DRAWINGS

FIG. 1 is a schematic diagram of a wireless communication system according to an embodiment of the invention.
FIG. 2 is a schematic flowchart of a paging method according to an embodiment of the invention.
FIG. 3 is a schematic block diagram of a paging device according to an embodiment of the invention.
FIG. 4 is a schematic block diagram of a paging device according to another embodiment of the invention.

### DETAILED DESCRIPTION

The technical solutions in the embodiments of the invention will be described in the following with reference to the accompanying drawings.

It is to be understood that the terms "system" and "network" are used interchangeably herein. The term "and/or" herein is merely used to describe relationships between associated objects, and indicates that there may be three relationships. For example, A and/or B may indicate that A exists separately, both A and B exist simultaneously, and B exists separately. In addition, the character "/" herein generally indicates that there is an "or" relationship between the contextual objects.

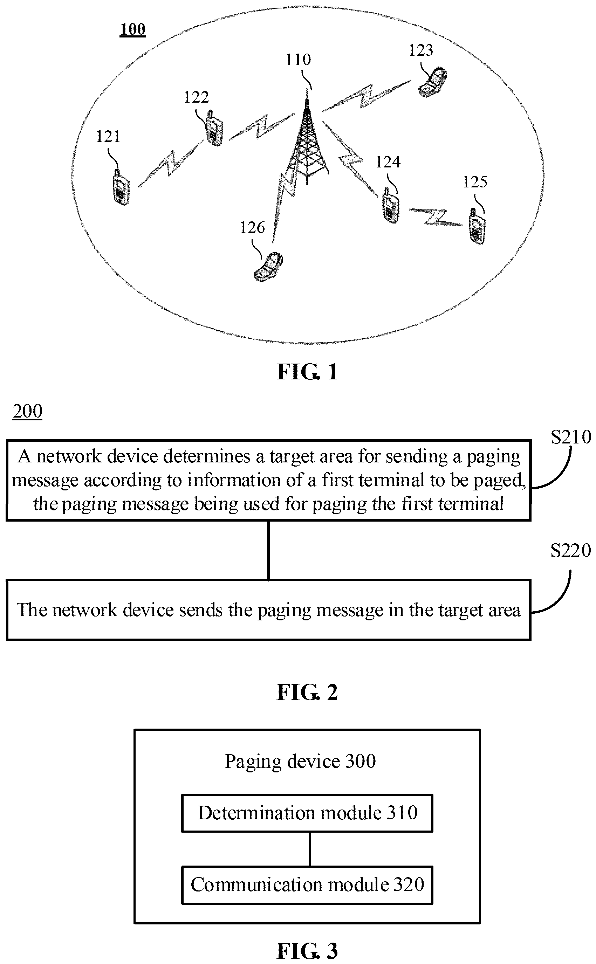

FIG. 1 is a schematic diagram of a wireless communication system 100 to which an embodiment of the invention is applied. The wireless communication system 100 may include at least one network device 110. The network device 100 may be a device communicating with a terminal device. Each network device 100 may provide communication coverage for a specific geographic area and may communicate with terminal devices located in the coverage area. The network device 100 may be a Base Transceiver Station (BTS) in a Global System for Mobile Communications (GSM) or a Code Division Multiple Access (CDMA) system, or may be a NodeB (NB) in a Wideband Code Division Multiple Access (WCDMA) system, or may be an Evolutional Node B (eNB or eNodeB) in a Long Term Evolution (LTE) system, or may be a wireless controller in a Cloud Radio Access Network (CRAN), or the network device may be a relay station, an access point, an in-vehicle device, a wearable device, a network side device in a future 5G network or a network device in a future evolved Public Land Mobile Network (PLMN).

The wireless communication system 100 also includes multiple terminal devices, such as terminal devices 121, 122, 123, 124, 125, and 126 as illustrated in FIG. 1. The terminal device may be mobile or fixed. The terminal device may be an access terminal, a User Equipment (UE), a user unit, a user station, a mobile radio station, a mobile station, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device having a wireless communication function, a computing device or other processing devices connected to a wireless modem, an in-vehicle device, a wearable device, a terminal device in a future 5G network, or a terminal device in a future evolved PLMN.

FIG. 1 exemplarily illustrates a network device and six terminal devices. Optionally, the wireless communication system 100 may include multiple network devices and other numbers of terminal devices, which is not limited in the embodiments of the invention. In addition, the wireless communication system 100 may further include other network entities such as a Mobile Management Entity (MME), a Serving Gateway (S-GW), and a Packet Data Network Gateway (P-GW). However, the embodiments of the invention are not limited thereto.

Specifically, the terminal device may communicate in a cellular communication mode or a D2D communication mode. In the cellular communication mode, the terminal device may communicate with other terminal devices through the network device. In the D2D communication mode, the terminal device may communicate directly with other terminal devices through a D2D link.

Among multiple terminal devices illustrated in FIG. 1, the terminal device 121 and the terminal device 125 may be referred to as remote terminals, which may communicate with the network device 110 through relay terminals 122 and 124, respectively. The terminal device 122 may relay data between the remote terminal 121 and the network device 110, and the terminal device 124 may relay data between the remote terminal 125 and the network device 110. In such a case, the terminal device 122 and the terminal device 124 may be referred to as relay terminals, and the relay terminals 122 and 124 may also directly communicate with the network device in a manner that the relay terminals do not assist other terminal devices. The terminal device 123 may communicate with the network device 110 without a relay terminal, and does not need to relay communication between other terminal devices and the network device 110.

A Uu interface is provided between respective terminal devices 122, 123, 124, and 126 and the network device 110, and the terminal devices may communicate with the network device 110 by using a cellular communication technology. A PC5 interface is provided between the relay terminal and the remote terminal, and a D2D communication technology is used for communication. The D2D communication technology may be specifically a SideLink (SL) technology in LTE, or may be a WIFI or Bluetooth technology in a WLAN, or may be other D2D communication technologies, which is not limited in the embodiments of the invention. The terminal device 121 and the terminal device 125 may also directly communicate with the network device 110 without the relay terminal. In such a case, a Uu interface is provided between respective terminal devices 121 and 125 and the network device, and the terminal devices 121 and 125 may communicate with the network device 110 by using a cellular communication technology.

When the network device determines that downlink data for a certain terminal device arrives at the network device, the network device does not know in which range the terminal device is to be paged. For example, if the terminal device is a remote terminal, the terminal device is not covered by a cellular network, that is, the terminal device is not in the coverage area of the cellular network. In this case, if the network device pages the terminal device in the coverage area of the cellular network, the terminal device cannot be effectively paged, and the terminal device cannot receive the downlink data sent by the network device in time, which may affect the user experience.

Moreover, if the first terminal is a remote terminal, the first terminal is not covered by the cellular network, and the network device sends a paging message for paging the first terminal in a range where the message can be received by a second terminal, that is, the second terminal can receive the paging message. However, if there is no direct link established between the second terminal and the first terminal, the second terminal needs to further establishes a direct link with the first terminal to forward the paging message for the first terminal to the first terminal. In this way, a delay in the reception of the paging message by the first terminal is caused, and the first terminal cannot receive downlink data sent by the network device in time, which may affect the user experience.

In view of this, the embodiment of the invention provides a paging method. Before sending a paging message, the network device determines a target area for sending the paging message according to information of the first terminal to be paged, and pages the first terminal in the target area, so that the first terminal can be effectively paged, and subsequent data transmission can be completed.

FIG. 2 is a schematic flowchart of a paging method 200 according to an embodiment of the invention. As illustrated in FIG. 2, the method 200 includes the operations as follows.

At S210, a network device determines a target area for sending a paging message according to information of a first terminal to be paged, the paging message being used for paging the first terminal.

At S220, the network device sends the paging message in the target area.

It is to be understood that FIG. 2 is a schematic flowchart of a paging method according to an embodiment of the invention. Although FIG. 2 illustrates detailed communication steps or operations of the method, the steps or operations are merely examples, and according to the embodiments of the present invention, other operations or modifications of the various operations in FIG. 2 may be performed. Moreover, the various steps in FIG. 2 may be performed in a different order than that presented in FIG. 2, and it is possible that not all operations in FIG. 2 are to be performed.

Optionally, in the embodiment of the invention, before the operation S210, the method may further include the following operation.

The network device determines that the first terminal is to be paged.

For example, the network device may determine that the first terminal is to be paged when downlink data for the first terminal arrives at the network device, or the network device may page the first terminal based on other trigger conditions, which is not limited in the embodiment of the invention.

In the embodiment of the invention, the first terminal may be a remote terminal or a relay terminal, and there may exist a coverage of a cellular network between the first terminal and the network device, or there is no coverage of a cellular network between the first terminal and the network device. If there is a coverage of a cellular network between the first terminal and the network device, the network device may page the first terminal through the cellular network. For example, the network device may page the first terminal in a coverage area of the cellular network, that is, if there is a cellular network between the network device and the first terminal, the target area for sending the paging message may be part or all of the coverage area of the cellular network, and the network device may send the paging message in the coverage area of the cellular network to page the first terminal.

Optionally, if there is no coverage of a cellular network between the first terminal and the network device, a relay terminal is required to relay communication between the first terminal and the network device. The network device may page the first terminal by using the relay terminal, and the paging message sent by the network device needs to be received by the relay terminal. Thus, the network device may send the paging message in a paging area for the relay terminal in order that the relay terminal receives the paging message, and forwards the paging message to the first terminal to perform subsequent data transmission.

The paging area for the relay terminal may be considered as an area in which the paging message can be received by the relay terminal, for example, a cell in which the relay terminal currently resides, or a TA of the relay terminal in a TA LIST of a core network.

Optionally, in some embodiments, the paging message includes identification information of the first terminal, such as a System Architecture Evolution ("SAE") Temporary Mobile Station Identifier ("S-TMSI"), or an International Mobile Subscriber Identity (IMSI), or a Radio Network Temporary Identifier (RNTI). The identification information may be used for the relay terminal to forward the paging message to the first terminal according to the identification information after receiving the paging message.

Optionally, in some embodiments, the information of the first terminal includes connection-state information between the first terminal and a second terminal.

The connection-state information between the first terminal and the second terminal may indicate whether a connection has been established between the first terminal and the second terminal.

Optionally, the first terminal may be a remote terminal, and the second terminal may be a relay terminal. The information of the first terminal may be used to indicate whether a connection has been established between the first terminal and the second terminal, that is, whether a direct link namely a D2D link is established.

Optionally, the information of the first terminal may also include information of a relay terminal that has established a connection with the first terminal. The network device selects a target relay terminal between the first terminal and the network device according to the information of the relay terminal, sends the paging message for the first terminal to the target relay terminal, such that the paging message is forwarded to the first terminal by the target relay terminal.

Optionally, the information of the first terminal may also specifically include quality information of a link between the first terminal and a relay terminal that has established a connection with the first terminal. The network device selects at least one relay terminal as a target relay terminal between the first terminal and the network device according to the quality information of the link between the first terminal and the relay terminal, sends the paging message for the first terminal to the at least one target terminal, such that the paging message is forwarded to the first terminal by the at least one target terminal.

Optionally, in some embodiments, if the information of the first terminal includes the connection-state information between the first terminal and the second terminal, the operation S210 further includes the following action.

If the connection-state information indicates that a connection has been established between the first terminal and the second terminal, the network device determines a specific area associated with the second terminal as the target area.

The operation S220 further includes the following action.

The paging message is sent in the specific area associated with the second terminal.

Specifically, there may be one or more terminal devices that have established a connection with the first terminal currently, and a set of the terminal devices that have established a connection with the first terminal is recorded as a set of candidate relay terminals. The second terminal may include at least one terminal in the set of the candidate relay terminals. For example, the second terminal may include a terminal device in the set of the candidate relay terminals, where a quality of a link between the terminal device and the first terminal satisfies a certain condition. Alternatively, the second terminal may be a terminal device in the set of the candidate relay terminals, where a quality of a link between the terminal device and the first terminal is the best.

Since a connection has been established between the first terminal and the second terminal, that is, a D2D link has been established, the network device may determine a specific area associated with the second terminal as a target area for sending the paging message, and the paging message is sent in the specific area associated with the second terminal. The specific area associated with the second terminal may be understood as an area where the second terminal can be paged, or an area where the second terminal can receive the paging message.

Optionally, if there is more than one second terminal, the specific area associated with the second terminal may be an intersection of registration areas of the more than one terminal, or a union of the registration areas of the more than one terminal. For example, the second terminals include UE1 and UE2, the registration area of UE1 is A1, the registration area of UE2 is A2, and the specific area associated with the second terminals may be A1 ∩ A2, or the specific area associated with the second terminals may be A1 U A2, which is not limited herein.

In the related art, when the first terminal is a remote terminal, the network device sends a paging message to any relay terminal in a network, and the relay terminal may not establish a connection with the first terminal. In this case, the relay terminal needs to further establish a connection with the first terminal to relay the paging message, and therefore, the paging message cannot be relayed to the first terminal in time, which affects an efficiency of the paging of the network device.

Therefore, in the paging method of the embodiments of the invention, in a case where the first terminal is a remote terminal and the second terminal is a relay terminal, the network device may send the paging message in a specific area associated with the second terminal that has established a connection with the first terminal to be paged, in order that the second terminal receives the paging message. Since a connection has been established between the second terminal and the first terminal, the second terminal may forward the paging message to the first terminal by using an established link, thereby effectively paging the first terminal.

Optionally, in some embodiments, the specific area associated with the second terminal may include at least one of: a registration area of the second terminal in a core network, a registration area of the second terminal in an access network, or a paging area of the access network.

For example, the registration area of the second terminal in the core network may include a TA LIST where the second terminal is located, where the TA LIST is stored in the core network. The network device may send the paging message in a TA in the TA LIST where the second terminal is located. The TA LIST where the second terminal is located may include TA LIST information of the second terminal, which is stored in the core network when the second terminal successfully registers in the core network. The TA LIST where the second terminal is located may also include a TA LIST where the second terminal is located after the second terminal performs TAU. The registration area of the second terminal in the core network may also be a core network area determined or pre-configured by the network device for paging the second terminal, which is not limited in the embodiments of the invention.

In the embodiments of the invention, the registration area of the second terminal in the access network may be understood as an access network area for paging the second terminal. For example, the registration area of the second terminal in the access network may include a cell where the second terminal selects to reside after being powered on, or a cell where the second terminal resides after cell reselection, or a cell where the second terminal resides after location update, or the registration area of the second terminal in the access network may be an access network area determined or pre-configured by the network device for paging the second terminal.

In the embodiments of the invention, the paging area of the access network may include part or all of one or more cells covered by the network device, that is, part or all of the area covered by the cellular network of the network device.

Optionally, in some embodiments, the foregoing information of the first terminal may further include at least one of quality information of a link between the first terminal and a cellular network, or quality information of a link between the first terminal and the second terminal.

That is, the information of the first terminal may include at least one of the connection-state information between the first terminal and the second terminal, the quality information of the link between the first terminal and the cellular network, or the quality information of the link between the first terminal and the second terminal.

Optionally, if there is more than one second terminal, the quality information of the link between the first terminal and the second terminal may include quality information of the links between the first terminal and the respective second terminals.

Optionally, as an embodiment, the operation S210 may further include the following action.

The network device determines the specific area associated with the second terminal as the target area when the quality information of the link between the first terminal and the cellular network satisfies a first preset condition, and/or the quality information of the link between the first terminal and the second terminal satisfies a second preset condition.

The operation of sending the paging message in the target area may include the following action.

The paging message is sent in the specific area associated with the second terminal.

That is, the network device may determine the target area for sending the paging message according to the quality information of the link between the first terminal and the cellular network and/or the quality information of the link between the first terminal and the second terminal. For example, if the quality of the link between the first terminal and the cellular network is good, the network device may determine to page the first terminal by using the cellular network, for example, the network device may determine a coverage area of the cellular network as the target area, and the paging message is sent in the coverage area of the cellular network.

Optionally, the network device may determine, in a case that the quality of the link between the first terminal and the second terminal is good, to send the paging message in a specific area associated with the second terminal, so that the second terminal receives the paging message, and relays the paging message to the first terminal.

Optionally, when the quality of the link between the first terminal and the cellular network is better than the quality of the link between the first terminal and the second terminal, the network device may determine to page the first terminal through the cellular network. That is, the paging message is sent in a coverage area of the cellular network. Optionally, when the quality of the link between the first terminal and the cellular network is worse than the quality of the link between the first terminal and the second terminal, it is determined that the paging message is sent in a specific area associated with the second terminal.

The specific area associated with the second terminal mentioned here may refer to the specific area associated with the second terminal described above, and will not be repeated here for the sake of brevity.

For example, the situation that the quality information of the link between the first terminal and the cellular network satisfies the first preset condition may include that the quality of the link between the first terminal and the cellular network is lower than a pre-configured first link quality threshold.

The situation that the quality information of the link between the first terminal and the second terminal satisfies the second preset condition may include that the quality of the link between the first terminal and the second terminal is higher than a pre-configured second link quality threshold.

That is, the network device may send the paging message in the specific area associated with the second terminal when the quality of the link between the first terminal and the cellular network is lower than the first link quality threshold, that is, the quality of the link between the first terminal and the cellular network is poor. Optionally, the network device may send the paging message in the specific area associated with the second terminal when the quality of the link between the first terminal and the second terminal is higher than the pre-configured second link quality threshold, that is, the quality of the link between the first terminal and the second terminal is good. Optionally, the network device may send the paging message in the specific area associated with the second terminal when the quality of the link between the first terminal and the cellular network is lower than the first link quality threshold and the quality of the link between the first terminal and the second terminal is higher than the pre-configured second link quality threshold.

The first link quality threshold and the second link quality threshold may be determined by the network device. For example, it may be determined by the network device according to a delay or Quality-of-Service (QoS) requirements of a service to be transmitted. If the service to be transmitted is a low-latency service, the network device may set a higher link quality threshold, or if the QoS requirement of the service to be transmitted is high, a higher link quality threshold may be set.

In the related art, regardless of the quality of the link between the first terminal and the cellular network or whether the first terminal is covered by a cellular network, the network device directly pages the first terminal through the cellular network, so that the first terminal cannot be effectively paged. According to the paging method in the embodiments of the invention, the network device determines, according to the quality of the link between the first terminal and the cellular network and/or the quality of the link between the first terminal and the second terminal, whether to page the first terminal through the cellular network or to page the first terminal by using the relay terminal. Therefore, the first terminal can be effectively paged, and downlink data sent by the network device can be received in time, thereby improving the user experience.

Optionally, the network device may be an access network device or a core network device. That is, the paging message may be a paging message sent by the access network, or may be a paging message sent by the core network.

For example, if the network device is an access network device, the network device may send the paging message in a registration area or a paging area of the second terminal in the access network. If the network device is a core network device, the network device may send the paging message in a registration area of the second terminal in the core network.

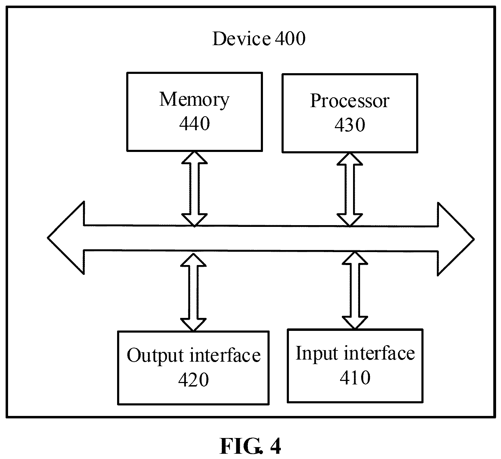

The method embodiments of the invention have been described in detail above with reference to FIG. 2. The apparatus embodiments of the invention will be described in detail below with reference to FIG. 3 and FIG. 4. It should be understood that the apparatus embodiment and the method embodiment correspond to each other, and the similar description may refer to the method embodiment.

FIG. 3 is a schematic block diagram of a paging device according to an embodiment of the invention. A paging device 300 in FIG. 3 includes a determination module 310 and a communication module 320.

The determination module 310 is configured to determine a target area for sending a paging message according to information of a first terminal to be paged, the paging message being used for paging the first terminal.

The communication module 320 is configured to send the paging message in the target area.

Optionally, in some embodiments, the information of the first terminal may include connection-state information between the first terminal and a second terminal.

Optionally, in some embodiments, the first terminal is a remote terminal, and the second terminal is a relay terminal between the first terminal and the device.

Optionally, in some embodiments, the determination module 310 is specifically configured to determine a specific area associated with the second terminal as the target area if the connection-state information indicates that a connection has been established between the first terminal and the second terminal.

The communication module 320 is specifically configured to send the paging message in the specific area associated with the second terminal.

Optionally, in some embodiments, the information of the first terminal may include at least one of quality information of a link between the first terminal and a cellular network, or quality information of a link between the first terminal and the second terminal.

Optionally, in some embodiments, the determination module 310 is specifically configured to determine the specific area associated with the second terminal as the target area when the quality information of the link between the first terminal and the cellular network satisfies a first preset condition, and/or the quality information of the link between the first terminal and the second terminal satisfies a second preset condition.

The communication module 320 is specifically configured to send the paging message in the specific area associated with the second terminal.

Optionally, in some embodiments, the situation that the quality information of the link between the first terminal and the cellular network satisfies the first preset condition includes that quality of the link between the first terminal and the cellular network is lower than a pre-configured first link quality threshold.

The situation that the quality information of the link between the first terminal and the second terminal satisfies the second preset condition includes that quality of the link between the first terminal and the second terminal is higher than a pre-configured second link quality threshold.

Optionally, in some embodiments, the specific area associated with the second terminal includes at least one of a registration area of the second terminal in a core network, a registration area of the second terminal in an access network, or a paging area of the access network.

Optionally, in some embodiments, the device is a core network device or an access network device.

Optionally, in some embodiments, the determination module 310 is further configured to determine that the first terminal is to be paged.

Optionally, in some embodiments, the determination module 310 is specifically configured to determine that the first terminal is to be paged when downlink data for the first terminal arrives at the device.

Specifically, the paging device 300 may correspond to (for example, may be configured on or may be) the network device described in the foregoing method 200, and each module or unit in the paging device 300 is configured to perform respective action or process performed by the network device in the foregoing method 200. Here, the detailed descriptions are omitted for avoiding redundancy.

As illustrated in FIG. 4, the embodiment of the invention further provides a paging device 400. The paging device 400 may be the paging device 400 in FIG. 3, which can be configured to perform the content performed by the network device in the method 200 illustrated in FIG. 2. The paging device 400 includes: an input interface 410, an output interface 420, a processor 430, and a memory 440. The input interface 410, the output interface 420, the processor 430, and the memory 440 may be connected by a bus system. The memory 440 is configured to store programs, instructions or codes. The processor 430 is configured to execute the programs, the instructions or the codes in the memory 440, so as to control the input interface 410 to receive a signal, control the output interface 420 to send a signal, and complete the operations in the foregoing method embodiment.

It is to be understood that in the embodiment of the invention, the processor 430 may be a Central Processing Unit (CPU), and the processor 430 may be a general-purpose processor, a Digital Signal Processor (DSP), an Application Specific Integrated Circuit (ASIC), a Field Programmable Gate Array (FPGA) or a programmable logic device, a discrete gate or transistor logic device, a discrete hardware component, etc. The general-purpose processor may be a microprocessor, or the processor may be any conventional processor.

The memory 440 may include a Read-Only Memory (ROM) and a Random Access Memory (RAM), which provides instructions and data to the processor 430. A portion of the memory 440 may also include a non-volatile RAM. For example, the memory 440 may also store device type information.

In the implementation process, each operation of the above method may be completed by an integrated logic circuit in the form of hardware in the processor 430 or an instruction in the form of software. The operations of the method disclosed in the embodiment of the invention may be directly embodied in a hardware processor, or may be performed by a combination of hardware and software modules in the processor. The software module may be located in a mature storage medium such as a RAM, a flash memory, a ROM, a programmable ROM or an electrically erasable programmable memory, or a register. The storage medium is located in the memory 440, and the processor 430 reads information in the memory 440 and completes the operations of the above method in combination with the hardware thereof. To avoid repetition, detailed description will not be repeated herein.

In a specific implementation, the determination module 310 included in the paging device 300 in FIG. 3 may be implemented by using the processor 430 in FIG. 4, and the communication module 320 included in the paging device 300 may be implemented by using the input interface 410 and the output interface 420 in FIG. 4.

The embodiment of the invention further provides a computer readable storage medium having stored therein one or more programs, the one or more programs including instructions, which when being executed by a portable electronic device including multiple applications, cause the portable electronic device to perform the method in the embodiment illustrated in FIG. 2.

The embodiment of the invention further provides a computer program including instructions, which when being executed by a computer, cause the computer to perform the corresponding flow of the method in the embodiment illustrated in FIG. 2.

Those of ordinary skill in the art will appreciate that the various exemplary units and algorithm steps described in combination with the embodiments disclosed herein can be implemented by electronic hardware or a combination of computer software and electronic hardware. Whether these functions are performed in the form of hardware or software depends on specific application and design constraints of the technical solution. A person skilled in the art can use different methods to implement the described functions for each specific application, which, however, should not be considered as going beyond the scope of the invention.

A person skilled in the art may clearly understand that for the convenience and brevity of the description, the specific working process of the system, the apparatus and the unit described above can refer to the corresponding process in the foregoing method embodiment, and details are not repeated herein.

In several embodiments provided by the invention, it is to be understood that the disclosed system, apparatus and method may be implemented in other manners. For example, the apparatus embodiments described above are merely illustrative. For example, the division of the unit is only a logical function division, and in actual implementation, there may be another division manner. For example, multiple units or components may be combined or integrated into another system, or some features may be ignored or not executed. In addition, the coupling or direct coupling or communication connection illustrated or discussed may be an indirect coupling or communication connection through some interfaces, apparatuses or units, and may be electrical, mechanical or otherwise.

The units described as separate components may or may not be physically separated, and the components displayed as units may or may not be physical units, that is, may be located in one place, or may be distributed to multiple network units. Some or all of the units may be selected according to actual needs to achieve the purpose of the solution of the present embodiment.

In addition, each functional unit in each embodiment of the invention may be integrated into one processing unit, or each unit may exist physically separately, or two or more units may be integrated into one unit.

The functions may be stored in a computer-readable storage medium if the functions are implemented in the form of a software functional unit and function as an independent product for sale or use. Based on such understanding, the technical solutions of the invention substantively, or a part thereof making a contribution to the prior art, may be embodied in the form of a software product stored in a storage medium, which includes a plurality of instructions used to cause a computer device (which may be a personal computer, a server, or a network device, etc.) to perform all or part of the steps of the methods described in various embodiments of the invention. The foregoing storage medium includes various medium that may store a program code such as a U disk, a mobile hard disk, a ROM, a RAM, a magnetic disk, or an optical disk, and the like.

Disclosed above are merely several specific embodiments of the invention. However, the scope of protection of the invention is not limited thereto. Any person skilled in the art can easily conceive changes or replacements within the technical scope disclosed in the invention, which should fall within the extent of protection of the invention. Therefore, the scope of protection of the invention should be subject to the protection scope of the claims.

## Claims

1. A paging method, **characterized by** comprising:
determining, by a network device, a target area for sending a paging message according to information of a first terminal to be paged, the paging message being used for paging the first terminal; and
sending the paging message in the target area.

2. The method of claim 1, wherein the information of the first terminal comprises connection-state information between the first terminal and a second terminal.

3. The method of claim 2, wherein the first terminal is a remote terminal, and the second terminal is a relay terminal between the first terminal and the network device.

4. The method of claim 2 or 3, wherein determining, by the network device, the target area for sending the paging message according to the information of the first terminal to be paged comprises:
in response to the connection-state information indicating that a connection has been established between the first terminal and the second terminal, determining, by the network device, a specific area associated with the second terminal as the target area,
and sending the paging message in the target area comprises:
sending the paging message in the specific area associated with the second terminal.

5. The method of any one of claims 1 to 3, wherein the information of the first terminal comprises at least one of:
quality information of a link between the first terminal and a cellular network, or quality information of a link between the first terminal and a second terminal.

6. The method of claim 5, wherein determining, by the network device, the target area for sending the paging message according to the information of the first terminal to be paged comprises:
determining, by the network device, a specific area associated with the second terminal as the target area when at least one of the following situations occurs: the quality information of the link between the first terminal and the cellular network satisfies a first preset condition, or the quality information of the link between the first terminal and the second terminal satisfies a second preset condition,
and sending the paging message in the target area comprises:
sending the paging message in the specific area associated with the second terminal.

7. The method of claim 6, wherein the situation that the quality information of the link between the first terminal and the cellular network satisfies the first preset condition comprises that quality of the link between the first terminal and the cellular network is lower than a pre-configured first link quality threshold;
the situation that the quality information of the link between the first terminal and the second terminal satisfies the second preset condition comprises that quality of the link between the first terminal and the second terminal is higher than a pre-configured second link quality threshold.

8. The method of claim 4, 6 or 7, wherein the specific area associated with the second terminal comprises at least one of:
a registration area of the second terminal in a core network, a registration area of the second terminal in an access network, or a paging area of the access network.

9. The method of any one of claims 1 to 8, wherein the network device is a core network device or an access network device.

10. The method of any one of claims 1 to 9, further comprising:
determining, by the network device, that the first terminal is to be paged.

11. The method of claim 10, wherein determining, by the network device, that the first terminal is to be paged comprises:
determining, by the network device, that the first terminal is to be paged when downlink data for the first terminal arrives at the network device.

12. A paging device, **characterized by** comprising:
a determination module, configured to determine a target area for sending a paging message according to information of a first terminal to be paged, the paging message being used for paging the first terminal; and
a communication module, configured to send the paging message in the target area.

13. The device of claim 12, wherein the information of the first terminal comprises connection-state information between the first terminal and a second terminal.

14. The device of claim 13, wherein the first terminal is a remote terminal, and the second terminal is a relay terminal between the first terminal and the device.

15. The device of claim 13 or 14, wherein the determination module is specifically configured to:
determine a specific area associated with the second terminal as the target area in response to the connection-state information indicating that a connection has been established between the first terminal and the second terminal,
and the communication module is specifically configured to:
send the paging message in the specific area associated with the second terminal.

16. The device of any one of claims 12 to 15, wherein the information of the first terminal comprises at least one of:
quality information of a link between the first terminal and a cellular network, or quality information of a link between the first terminal and a second terminal.

17. The device of claim 16, wherein the determination module is specifically configured to:
determine a specific area associated with the second terminal as the target area when at least one of the following situations occurs: the quality information of the link between the first terminal and the cellular network satisfies a first preset condition, or the quality information of the link between the first terminal and the second terminal satisfies a second preset condition,
and the communication module is specifically configured to:
send the paging message in the specific area associated with the second terminal.

18. The device of claim 17, wherein the situation that the quality information of the link between the first terminal and the cellular network satisfies the first preset condition comprises that quality of the link between the first terminal and the cellular network is lower than a pre-configured first link quality threshold;
the situation that the quality information of the link between the first terminal and the second terminal satisfies the second preset condition comprises that quality of the link between the first terminal and the second terminal is higher than a pre-configured second link quality threshold.

19. The device of claim 15, 17 or 18, wherein the specific area associated with the second terminal comprises at least one of:
a registration area of the second terminal in a core network, a registration area of the second terminal in an access network, or a paging area of the access network.

20. The device of any one of claims 12 to 19, wherein the device is a core network device or an access network device.

21. The device of any one of claims 12 to 20, wherein the determination module is further configured to:
determine that the first terminal is to be paged.

22. The device of claim 21, wherein the determination module is specifically configured to:
determine that the first terminal is to be paged when downlink data for the first terminal arrives at the device.
